# EUROPEAN PATENT APPLICATION

(11) **EP 2 246 395 A1**
(43) Date of publication of application: **03.11.2010**
(21) Application number: 09703912.7
(22) Date of filing: 21.01.2009
(51) Int. Cl.: C09C 3/06, C09C 1/02, C09C 1/28, C09D 5/16, C25D 9/08

(54) **POWDER COATED WITH COPPER (I) OXIDE, AND PROCESS FOR PRODUCTION THEREOF**

(30) Priority: 24.01.2008 JP 2008013671; 19.01.2009 JP 2009008550
(71) Applicant: Nippon Chemical Industrial Co., Ltd., Koto-ku, Tokyo 136-8515 (JP)
(72) Inventor: TANAKA, Yasuyuki, Tokyo 136-8515 (JP); KINOSE, Yutaka, Tokyo 136-8515 (JP)
(74) Representative: Evans, Marc Nigel
(86) International application number: PCT/JP2009/050874
(87) International publication number: WO 2009/093609

(57) **Abstract**

Disclosed is a powder coated with copper (I) oxide, in which copper (I) oxide is adhered well, which can be dispersed well in a stain-proof coating, and which can impart high storage stability to a stain-proof coating. Also disclosed is a process for producing a powder coated with copper (I) oxide, which comprises the following steps: a surface treatment step of contacting a core material with at least one aqueous surface treatment solution selected from an aqueous solution of a tin salt, an aqueous solution of a silver salt and an aqueous solution of a palladium salt to produce a surface-treated product of the core material; an electrodeposition step of dispersing the surface-treated product of the core material in an aqueous electrolyte solution containing an electrolyte and an anti-oxidant agent, and electrodepositing copper (I) oxide on the surface of the surface-treated product of the core material by using metal copper as an anode to produce a powder coated with copper (I) oxide; and a water-washing step of washing the powder coated with copper (I) oxide with water to produce the desired powder coated with copper (I) oxide, wherein the aqueous electrolyte solution has a chlorine ion concentration of 20 to 200 g/L.

## Description

### Technical Field

The present invention relates to new cuprous oxide preferred as an antifouling pigment and is a cuprous oxide-coated powder in which the surface of a core material is coated with cuprous oxide, and a method for manufacturing the same.

### Background Art

Cuprous oxide has been known as an antifouling pigment from old times and is formulated into a paint, which is used as a ship bottom paint to prevent the attachment of shells and algae in the sea. The cuprous oxide has a true specific gravity as large as 6.0, and a problem of the cuprous oxide has been that when the cuprous oxide is formulated into a ship bottom paint, the cuprous oxide settles due to a difference in specific gravity between the vehicle and the cuprous oxide. In addition, because of a rise in the price of metal raw materials in recent years, the reduction of the amount of use has been a problem in the industry.

A method for decreasing specific gravity by coating the surface of a core material with cuprous oxide is considered as a method for decreasing specific gravity. For example, Japanese Patent Laid-Open No. 1-213368 (Patent Document 1) discloses a method for manufacturing a composite pigment for an antifouling paint by performing electrolysis using a liquid in which a powder comprising at least SiO₂ and/or Al₂O₃ is suspended in an aqueous solution comprising chlorine ions, as the electrolyte, and a copper plate as the anode.
Patent Document 1: Japanese Patent Laid-Open No. 1-213368 (CLAIMS)

### Disclosure of the Invention

### Problems to be Solved by the Invention

However, a problem of a cuprous oxide-coated powder obtained by the manufacturing method described in Patent Document 1 has been that it has poor practicality, for example, the adhesion of the cuprous oxide is poor, the dispersibility in an antifouling paint is poor, and the storage stability of the antifouling paint worsens.

Accordingly, it is an object of the present invention to provide a cuprous oxide-coated powder in which the adhesion of cuprous oxide is high and which has good dispersibility in an antifouling paint and increases the storage stability of the antifouling paint.

### Means for Solving the Problems

The present inventors have diligently studied over and over to solve the above problem in conventional art, and, as a result, found that in a method for manufacturing a cuprous oxide-coated powder by electrodepositing cuprous oxide on a core material and then performing water-washing, (1) a cuprous oxide-coated powder in which the adhesion of the cuprous oxide is high and which has good dispersibility can be obtained by surface-treating the surface of the core material, using an aqueous solution of a specific metal salt, before electrodepositing the cuprous oxide on the core material, and (2) the cuprous oxide-coated powder obtained in such a manner has a small amount of soluble chlorine ions and increased storage stability of an antifouling paint, and so on, leading to the completion of the present invention.

Specifically, the present invention (1) provides a cuprous oxide-coated powder comprising a core material and cuprous oxide coating the surface of the core material, **characterized in that**
a mass ratio of the core material/the cuprous oxide is 95/5 to 10/90, and
an amount of chlorine ions dissolved from the cuprous oxide-coated powder in water is 0.1% by mass or less with respect to the cuprous oxide-coated powder.

In addition, the present invention (2) provides a method for manufacturing a cuprous oxide-coated powder, characterized by comprising:
a surface treatment step of contacting a core material with any one or two or more surface treatment aqueous solutions of an aqueous solution of a stannous salt, an aqueous solution of a silver salt, and an aqueous solution of a palladium salt to obtain a surface-treated core material;
an electrodeposition step of dispersing the surface-treated core material in an electrolytic aqueous solution containing an electrolyte and an antioxidant, and electrodepositing cuprous oxide on the surface of the surface-treated core material, using metal copper as an anode, to obtain a cuprous oxide-coated powder; and
a water-washing step of water-washing the cuprous oxide-coated powder to obtain a cuprous oxide-coated powder, wherein
the concentration of chlorine ions in the electrolytic aqueous solution is 20 to 200 g/L.

### Advantage of the Invention

The present invention can provide a cuprous oxide-coated powder in which the adhesion of cuprous oxide is high and which has good dispersibility in an antifouling paint and increases the storage stability of the antifouling paint.

### Brief Description of the Drawings

Figure 1 is an electron micrograph of a silica powder, which is a raw material, in Example 1;
Figure 2 is an electron micrograph of a cuprous oxide-coated powder B1 before an adhesion test in Example 1;
Figure 3 is an electron micrograph of the cuprous oxide-coated powder B1 after the adhesion test in Example 1;
Figure 4 is an electron micrograph of fly ash, which is a raw material, in Example 2;
Figure 5 is an electron micrograph of a cuprous oxide-coated powder B2 before an adhesion test in Example 2;
Figure 6 is an electron micrograph of a silica stone powder, which is a raw material, in Example 3;
Figure 7 is an electron micrograph of a cuprous oxide-coated powder B3 before an adhesion test in Example 3;
Figure 8 is an electron micrograph of a polyethylene powder, which is a raw material, in Example 4;
Figure 9 is an electron micrograph of a cuprous oxide-coated powder B4 before an adhesion test in Example 4;
Figure 10 is an electron micrograph of a fused silica powder, which is a raw material, in Example 5;
Figure 11 is an electron micrograph of a cuprous oxide-coated powder B5 before an adhesion test in Example 5;
Figure 12 is an electron micrograph of a cuprous oxide-coated powder B6 before an adhesion test in Comparative Example 1;
Figure 13 is an electron micrograph of the cuprous oxide-coated powder B6 after the adhesion test in Comparative Example 1;
Figure 14 is an electron micrograph of a cuprous oxide-coated powder B7 before an adhesion test in Comparative Example 2;
Figure 15 is an electron micrograph of a cuprous oxide-coated powder B8 before an adhesion test in Comparative Example 3;
Figure 16 is an electron micrograph of aggregate particles of the cuprous oxide-coated powder B8 before the adhesion test in Comparative Example 3;
Figure 17 is a particle size distribution diagram of the silica powder, which is a raw material, in Example 1;
Figure 18 is a particle size distribution diagram of the cuprous oxide-coated powder B1 before the adhesion test in Example 1;
Figure 19 is a particle size distribution diagram of the fly ash, which is a raw material, in Example 2;
Figure 20 is a particle size distribution diagram of the cuprous oxide-coated powder B2 before the adhesion test in Example 2;
Figure 21 is a particle size distribution diagram of the silica stone powder, which is a raw material, in Example 3;
Figure 22 is a particle size distribution diagram of the cuprous oxide-coated powder B3 before the adhesion test in Example 3;
Figure 23 is a particle size distribution diagram of the polyethylene powder, which is a raw material, in Example 4;
Figure 24 is a particle size distribution diagram of the cuprous oxide-coated powder B4 before the adhesion test in Example 4;
Figure 25 is a particle size distribution diagram of the fused silica powder, which is a raw material, in Example 5;
Figure 26 is a particle size distribution diagram of the cuprous oxide-coated powder B5 before the adhesion test in Example 5;
Figure 27 is a particle size distribution diagram of the cuprous oxide-coated powder B6 before the adhesion test in Comparative Example 1;
Figure 28 is a particle size distribution diagram of the cuprous oxide-coated powder B7 before the adhesion test in Comparative Example 2; and
Figure 29 is a particle size distribution diagram of the cuprous oxide-coated powder B8 before the adhesion test in Comparative Example 3.

### Best Mode for Carrying Out the Invention

The cuprous oxide-coated powder according to the present invention is a cuprous oxide-coated powder comprising a core material and cuprous oxide coating the surface of the core material, wherein
a mass ratio of the core material/the cuprous oxide is 95/5 to 10/90, and
an amount of chlorine ions dissolved from the cuprous oxide-coated powder in water is 0.1% by mass or less with respect to the cuprous oxide-coated powder.

The cuprous oxide-coated powder according to the present invention is a cuprous oxide-coated powder comprising a core material and cuprous oxide coating the surface of the core material, and the core material is coated with the cuprous oxide.

Examples of the core material for the cuprous oxide-coated powder according to the present invention include silicic acid-containing inorganic compounds, alkaline earth metal compounds, alumina, and organic compounds. Examples of the silicic acid-containing inorganic compounds for the core material include crystalline silica, amorphous silica, diatomaceous earth, various zeolites, talc, clay, fly ash, glass beads, glass balloons, and shirasu balloons. Examples of the alkaline earth metal compounds for the core material include alkaline earth metal salts, such as barium sulfate and calcium carbonate. Examples of the organic compounds for the core material include thermoplastic resins and thermosetting resins, more specifically, polyethylene, polypropylene, acrylic resins, polystyrene, polyester, fluororesins, silicon resins, phenolic resins, urea resins, melamine resins, and epoxy resins.

In the cuprous oxide-coated powder according to the present invention, the mass ratio of the core material/the cuprous oxide is 95/5 to 10/90, and the mass ratio is appropriately selected in the above range, depending on the type of core material.

In the cuprous oxide-coated powder according to the present invention, the amount of chlorine ions dissolved in water from the cuprous oxide-coated powder when the cuprous oxide-coated powder is added to water is 0.1% by mass or less with respect to the cuprous oxide-coated powder. The chlorine ions dissolved from the cuprous oxide-coated powder in water are easily dissolved in an antifouling paint. Therefore, when the cuprous oxide-coated powder is formulated into a paint as a ship bottom paint, the gelation of the antifouling paint occurs and the storage stability worsens if the amount of chlorine ions dissolved from the cuprous oxide-coated powder in water is larger than the above range. In the present invention, the amount of chlorine ions dissolved from the cuprous oxide-coated powder in water being 0.1% by mass or less with respect to the cuprous oxide-coated powder refers to the following. When the cuprous oxide-coated powder is added to water, and the amount of chlorine ions dissolved in the water is measured, the value of (X/Y) × 100 is 0.1 or less, wherein Y (g) is the mass of the cuprous oxide-coated powder added, and X (g) is the amount of chlorine ions dissolved in the water from the cuprous oxide-coated powder.

In the present invention, the amount of chlorine ions dissolved from the cuprous oxide-coated powder in water is a value measured by an ion chromatograph.

The cuprous oxide-coated powder according to the present invention is preferably manufactured by a method for manufacturing a cuprous oxide-coated powder according to the present invention shown below.

The method for manufacturing a cuprous oxide-coated powder according to the present invention is a method for manufacturing a cuprous oxide-coated powder, comprising:
a surface treatment step of contacting a core material with any one or two or more surface treatment aqueous solutions of an aqueous solution of a stannous salt, an aqueous solution of a silver salt, and an aqueous solution of a palladium salt to obtain a surface-treated core material;
an electrodeposition step of dispersing the surface-treated core material in an electrolytic aqueous solution containing an electrolyte and an antioxidant, and electrodepositing cuprous oxide on the surface of the surface-treated core material, using metal copper as an anode, to obtain a cuprous oxide-coated powder; and
a water-washing step of water-washing the cuprous oxide-coated powder to obtain a cuprous oxide-coated powder, wherein
the concentration of chlorine ions in the electrolytic aqueous solution is 20 to 200 g/L.

The surface treatment step for the method for manufacturing a cuprous oxide-coated powder according to the present invention is the step of contacting a core material with a surface treatment aqueous solution to perform the surface treatment of the core material to obtain a surface-treated core material.

The core material for the method for manufacturing a cuprous oxide-coated powder according to the present invention is the same as the core material for the cuprous oxide-coated powder according to the present invention.

When the core material for the cuprous oxide-coated powder according to the present invention is a thermoplastic resin, a thermosetting resin, or the like, more specifically, polyethylene, polypropylene, an acrylic resin, polystyrene, polyester, a fluororesin, a silicon resin, a phenolic resin, a urea resin, a melamine resin, an epoxy resin, or the like, the core material subjected to alkali washing and surface roughening with an acid can be used. In other words, the core material may be subjected to alkali washing and surface roughening with an acid before the surface treatment step for the method for manufacturing a cuprous oxide-coated powder according to the present invention is performed.
Examples of the alkali used in alkali washing the core material for the cuprous oxide-coated powder according to the present invention include sodium hydroxide, sodium carbonate, sodium orthosilicate, and sodium pyrophosphate. Examples of the acid used in surface roughening the core material for the cuprous oxide-coated powder according to the present invention with an acid include one selected from sulfuric acid, nitric acid, phosphoric acid, chromic acid, hydrochloric acid, acetic acid, hydrofluoric acid, and the like, or a mixed acid of two or more thereof.

The average particle diameter of the core material is preferably 0.5 to 100 µm. If the average particle diameter of the core material is less than the above range, problems such as poor handling properties and difficulty in solid-liquid separation tend to occur. On the other hand, if the average particle diameter of the core material is more than the above range, problems such as poor dispersion stability in an antifouling paint and poor smoothness of the coating film tend to occur.

The outer shape of the core material is not particularly limited. In addition, the core material may be hollow particles or solid particles.

The surface treatment aqueous solution for the method for manufacturing a cuprous oxide-coated powder according to the present invention is an aqueous solution of a stannous salt, an aqueous solution of a silver salt, or an aqueous solution of a palladium salt, or a mixed aqueous solution of a silver salt and a palladium salt. In the surface treatment step, the core material may be contacted only with one type of surface treatment aqueous solution, or the core material may be contacted with one surface treatment aqueous solution and then with another type of surface treatment aqueous solution.

Examples of the aqueous solution of a stannous salt for the surface treatment aqueous solution include aqueous solutions of stannous halides, such as an aqueous solution of stannous fluoride and an aqueous solution of stannous chloride, and an aqueous solution of stannous sulfate. Examples of the aqueous solution of a silver salt for the surface treatment aqueous solution include aqueous solutions of silver nitrate, silver acetate, and silver sulfate. Examples of the aqueous solution of a palladium salt according to the surface treatment aqueous solution include an aqueous solution of palladium chloride.

The concentration of the stannous salt, the silver salt, or the palladium salt in the surface treatment aqueous solution is preferably 0.1 to 40 g/L, particularly preferably 0.5 to 30 g/L.

The surface treatment aqueous solution can contain hydrochloric acid and ammonia water, as required.

The method for contacting the core material with the surface treatment aqueous solution in the surface treatment step is not particularly limited. Examples of the method include a method comprising adding the core material to the surface treatment aqueous solution and stirring them.

The temperature of the surface treatment aqueous solution in performing the surface treatment step is not particularly limited and is preferably 0 to 70°C, particularly preferably 10 to 50°C.

In the surface treatment step, the core material is contacted with the surface treatment aqueous solution, and then, the core material is separated from the surface treatment aqueous solution to obtain the surface-treated core material. In the surface treatment step, the core material may be contacted only with one type of surface treatment aqueous solution, or the core material may be contacted with two or more types of surface treatment aqueous solution, for example, the core material is contacted with one surface treatment aqueous solution and then separated, and further contacted with another surface treatment aqueous solution and separated.

Examples of the method for separating the core material from the surface treatment aqueous solution after performing surface treatment include Buchner filtration and centrifugation. The surface-treated core material separated from the surface treatment aqueous solution can be dried as required.

The electrodeposition step for the method for manufacturing a cuprous oxide-coated powder according to the present invention is a step of dispersing the surface-treated core material in an electrolytic aqueous solution, and electrodepositing cuprous oxide on the surface of the surface-treated core material, using metal copper as an anode, to obtain a cuprous oxide-coated powder (before water-washing).

The electrolytic aqueous solution for the method for manufacturing a cuprous oxide-coated powder according to the present invention contains an electrolyte and an antioxidant.

The electrolyte for the electrolytic aqueous solution needs to have chlorine ions and is sodium chloride or potassium chloride.

The concentration of chlorine ions in the electrolytic aqueous solution is 20 to 200 g/L, preferably 20 to 150 g/L. If the concentration of chlorine ions in the electrolytic aqueous solution is less than the above range, the electrodeposition rate is slow, and the operability worsens. On the other hand, if the concentration of chlorine ions in the electrolytic aqueous solution is more than the above range, the amount of chlorine ions taken in the electrodeposited cuprous oxide increases, and the chlorine ions cannot be sufficiently removed even if water-washing is performed in the water-washing step.

Examples of the antioxidant for the electrolytic aqueous solution include glycerin, citric acid, and saccharides.

The concentration of the antioxidant in the electrolytic aqueous solution is preferably 0.3 to 60 g/L, particularly preferably 0.5 to 40 g/L. If the concentration of the antioxidant in the electrolytic aqueous solution is less than the above range, it tends to be difficult to obtain the effect of preventing the oxidation of the cuprous oxide. On the other hand, even if the concentration of the antioxidant in the electrolytic aqueous solution is more than the above range, the effect of preventing the oxidation of the cuprous oxide is obtained, but the effect reaches a maximum, and it is difficult to obtain the effect corresponding to the concentration.

In the electrodeposition step, the amount of the surface-treated core material dispersed in the electrolytic aqueous solution is preferably 1 to 80 g/L, particularly preferably 1 to 60 g/L, with respect to the electrolytic aqueous solution. If the amount of the surface-treated core material dispersed in the electrolytic aqueous solution is less than the above range, the efficiency of electrodeposition tends to worsen. On the other hand, if the amount of the surface-treated core material dispersed in the electrolytic aqueous solution is more than the above range, the concentration of the core material in the electrolytic aqueous solution is high, and therefore, the aggregation of the core material tends to occur during electrodeposition.

In the electrodeposition step, metal copper is used as the anode, and usually, a metal copper plate is used. The purity of the metal copper for the electrodeposition step may be 99% or more. In the electrodeposition step, metal copper, SUS, or the like is used as the cathode, and usually, a metal copper plate, a SUS plate, or the like is used.

In the electrodeposition step, the cuprous oxide is electrodeposited on the surface of the surface-treated core material by adding the surface-treated core material to the electrolytic aqueous solution, stirring the electrolytic aqueous solution to disperse the surface-treated core material, placing the anode and the cathode, and passing an electric current with stirring.

The electrodeposition temperature in the electrodeposition in the electrodeposition step is preferably 10 to 70°C. If the electrodeposition temperature is less than the above range, the electrodeposition rate tends to decrease. On the other hand, if the electrodeposition temperature is more than the above range, the generation of gas accompanying the electrodeposition increases, and the adhesion between the cuprous oxide and the core material surface tends to decrease.

The current density in the electrodeposition in the electrodeposition step is 1 to 30 A/dm², preferably 1 to 10 A/dm². If the current density is less than the above range, the time required for the electrodeposition increases, and the operation efficiency tends to worsen. On the other hand, if the current density is more than the above range, chlorine ions taken in the electrodeposited cuprous oxide tends to increase.

In the electrodeposition step, the coating amount of the cuprous oxide to coat the core material can be adjusted by electrodeposition time in the electrodeposition. This coating amount of the cuprous oxide is appropriately adjusted depending on the type of core material and is preferably an amount in which the mass ratio of the core material/the cuprous oxide is 95/5 to 10/90. The electrodeposition time in the electrodeposition in the electrodeposition step is appropriately selected depending on the coating amount of the cuprous oxide and is usually, preferably 10 minutes to 4 hours.

In the electrodeposition step, after the electrodeposition is performed, the cuprous oxide-coated powder is separated from the electrolytic aqueous solution by Buchner filtration, centrifugation, or the like to obtain the cuprous oxide-coated powder (before water-washing). The cuprous oxide-coated powder before water-washing obtained by performing the electrodeposition step is also described as the cuprous oxide-coated powder (before water-washing).

The water-washing step for the method for manufacturing a cuprous oxide-coated powder according to the present invention is the step of water-washing the cuprous oxide-coated powder (before water-washing) obtained in the electrodeposition step to obtain a water-washed cuprous oxide-coated powder.

In the water-washing step, repulp washing is general as the method for water-washing the cuprous oxide-coated powder. At this time, the slurry concentration of the cuprous oxide-coated powder in a mixed slurry of the cuprous oxide-coated powder (before water-washing) and water is 5 to 20% by mass, and the washing time is 10 minutes to 60 minutes. In the water-washing step, warm water at 10 to 70°C can also be used as the wash water.

In the water-washing step, the cuprous oxide-coated powder (before water-washing) is water-washed until the concentration of chlorine ions in the wash water used for the washing is 0.1% or less. The presence of the chlorine ions in the wash liquid can be determined by taking the supernatant liquid, dropping an aqueous solution of silver nitrate into the supernatant liquid, and observing the state of cloudiness of the supernatant liquid.

In the water-washing step, preferably, the cuprous oxide-coated powder is washed with wash water containing an antioxidant, because the coating cuprous oxide can be prevented from being oxidized during the water-washing step. In this case, examples of the antioxidant contained in the wash water include glycerin and saccharides. The concentration of the antioxidant in the wash water is preferably 0.3 to 60 g/L, particularly preferably 0.5 to 40 g/L.

In the water-washing step, after the cuprous oxide-coated powder (before water-washing) is water-washed, the cuprous oxide-coated powder after the water-washing is separated from the wash liquid and dried to obtain the water-washed cuprous oxide-coated powder.

In the water-washing step, not only chlorine ions attached to the surface of the coating layer of the coating cuprous oxide, but also chlorine ions contained in the coating layer of the cuprous oxide can be removed. Therefore, in the cuprous oxide-coated powder obtained by performing the water-washing step, the content of chlorine ions dissolved in an antifouling paint (hereinafter also described as soluble chlorine ions) when the cuprous oxide-coated powder is dispersed in the antifouling paint is low.

The cuprous oxide-coated powder obtained by performing the method for manufacturing a cuprous oxide-coated powder according to the present invention is a cuprous oxide-coated powder in which the amount of chlorine ions dissolved from the cuprous oxide-coated powder when the cuprous oxide-coated powder is added to water is 0.1% by mass or less with respect to the cuprous oxide-coated powder.

The chlorine ions dissolved from the cuprous oxide-coated powder when the cuprous oxide-coated powder is added to water are easily dissolved in an antifouling paint. Therefore, when the cuprous oxide-coated powder is formulated into a paint as a ship bottom paint, the gelation of the antifouling paint occurs and the storage stability worsens if the amount of chlorine ions dissolved from the cuprous oxide-coated powder when the cuprous oxide-coated powder is added to water is larger than the above range.
In the cuprous oxide-coated powder according to the present invention, the amount of chlorine ions dissolved from the cuprous oxide-coated powder when the cuprous oxide-coated powder is added to water is 0.1% by mass or less with respect to the cuprous oxide-coated powder, and therefore, the amount of soluble chlorine ions is small. Therefore, the antifouling paint is not easily gelled, and therefore, with the cuprous oxide-coated powder according to the present invention, an antifouling paint having excellent storage stability is obtained.

In the method for manufacturing a cuprous oxide-coated powder according to the present invention, the throwing power and adhesion of the cuprous oxide are improved by performing the surface treatment step, and therefore, the adhesion of the coating layer of the cuprous oxide increases, and a single powder of cuprous oxide and aggregates of the cuprous oxide-coated powder can be extremely reduced. Therefore, with the method for manufacturing a cuprous oxide-coated powder according to the present invention, a cuprous oxide-coated powder having good dispersion stability in an antifouling paint is obtained. In the present invention, a single powder of cuprous oxide and aggregates of the cuprous oxide-coated powder being extremely reduced is found by comparing the particle size distribution of the core material that is a raw material in the method for manufacturing a cuprous oxide-coated powder according to the present invention, with the particle size distribution of the cuprous oxide-coated powder obtained by the method for manufacturing a cuprous oxide-coated powder according to the present invention.

In addition, in the method for manufacturing a cuprous oxide-coated powder according to the present invention, the surface of the core material is uniformly coated with the cuprous oxide, and therefore, in the water-washing step, not only chlorine ions present on the surface of the coating layer of the cuprous oxide, but also chlorine ions contained in the coating layer of the cuprous oxide can be washed. Therefore, with the method for manufacturing a cuprous oxide-coated powder according to the present invention, a cuprous oxide-coated powder having a small amount of soluble chlorine ions is obtained.
In other words, there are no aggregate particles such as fine particles of cuprous oxide, which have been conventionally present and are difficult to wash, in the present invention, and therefore, the contained chlorine ions are removed.

Next, the present invention will be more specifically described by Examples, but these Examples are only illustrative and do not limit the present invention.

### Examples

### (Example 1)

### (Surface Treatment Step)

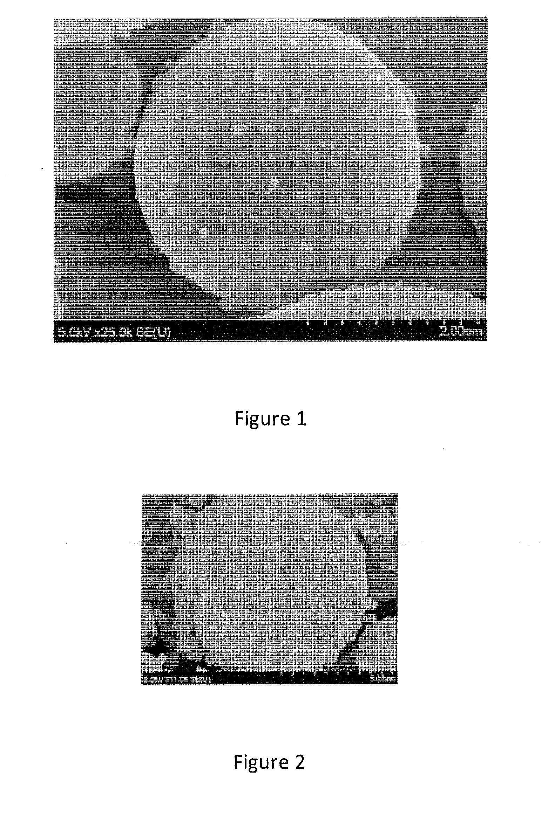

A silica powder (average particle diameter: 5 µm) (electron micrograph: Figure 1) as a core material was dispersed in an aqueous solution of tin fluoride (1 g/L) followed by stirring, filtration, water-washing, dispersion in an aqueous solution of silver nitrate (1 g/L), stirring, filtration, water-washing, and drying to obtain a surface-treated core material A1.

### (Electrodeposition Step and Water-Washing Step)

Then, 10 g of the surface-treated core material A1 was added to 1 L of an electrolytic aqueous solution, and electrodes were placed. An electric current was passed for 36 minutes under the following conditions, with stirring by a magnetic stirrer, to electrodeposit cuprous oxide on the surface-treated core material A1. Then, the electrolytic aqueous solution was filtered, and the filtered material was water-washed and then dispersed in an aqueous solution of glycerin followed by filtration and drying to obtain 21 g of a cuprous oxide-coated powder B1. The true specific gravity of the cuprous oxide-coated powder B1 was 3.1 g/cm³.

### <Electrolytic Aqueous Solution>

Sodium chloride: 250 g/L (chlorine ion concentration: 152 g/L)
Glycerin: 10 g/L
<Treatment Conditions>
Current density: 7 A/dm²
Liquid temperature of electrolytic aqueous solution: 40°C Electrodes: copper plates for both anode and cathode

### (Performance Evaluation)

### <Surface Observation>

The cuprous oxide-coated powder B1 was observed with an electron microscope. An electron micrograph is shown in Figure 2. As a result, it was observed that the surface of the core material was evenly coated with cuprous oxide particles. In addition, the aggregation of the cuprous oxide-coated powder was hardly seen. In addition, a single powder of cuprous oxide was hardly seen.

### <Particle Size Distribution Measurement>

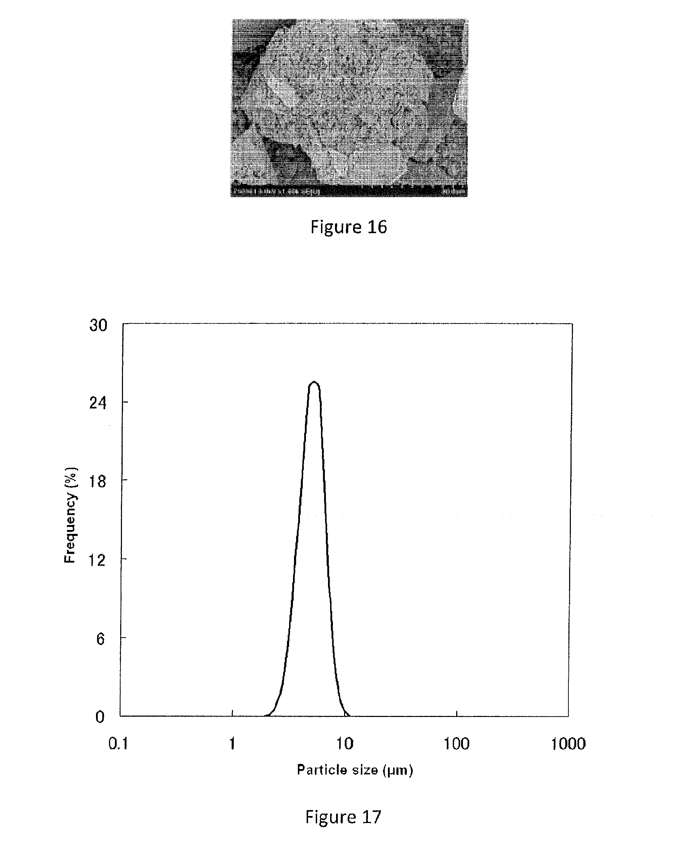

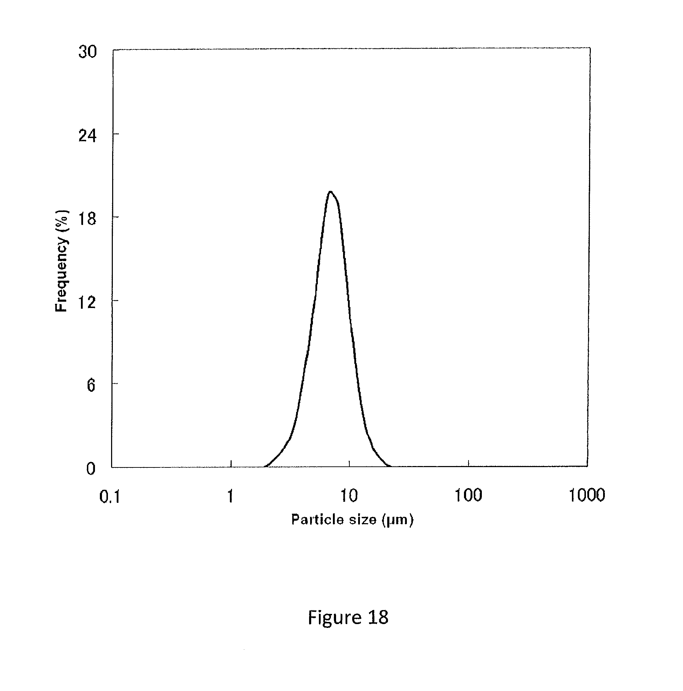

The particle size distribution of the silica powder of the core material, which was a raw material, and the obtained cuprous oxide-coated powder B1 was measured.
The particle size distribution of the silica powder of the core material is shown in Figure 17, and the particle size distribution of the cuprous oxide-coated powder B1 is shown in Figure 18. With no fine powder portions seen, the shape of the particle size distribution of the cuprous oxide-coated powder B1 was almost unchanged from the shape of the particle size distribution of the silica powder of the core material, which was a raw material. Therefore, from these distribution diagrams, it is found that in the cuprous oxide-coated powder B1, the surface of the core material is uniformly coated with the cuprous oxide particles. The particle size distribution measurement was performed by Microtrac, NIKKISO CO., LTD.

### <Measurement of Amount of Chlorine Ions Dissolved in Water>

The amount of chlorine ions dissolved in water from the cuprous oxide-coated powder when the cuprous oxide-coated powder was added to the water was measured by an ion chromatograph. As a result, the amount of chlorine ions dissolved from the cuprous oxide-coated powder in water was 0.05% by mass with respect to the cuprous oxide-coated powder. The measurement equipment was DX-320, and the column was AS12A. Na₂CO₃ and NaHCO₃ were used for the eluent.

### <Adhesion Test of Cuprous Oxide>

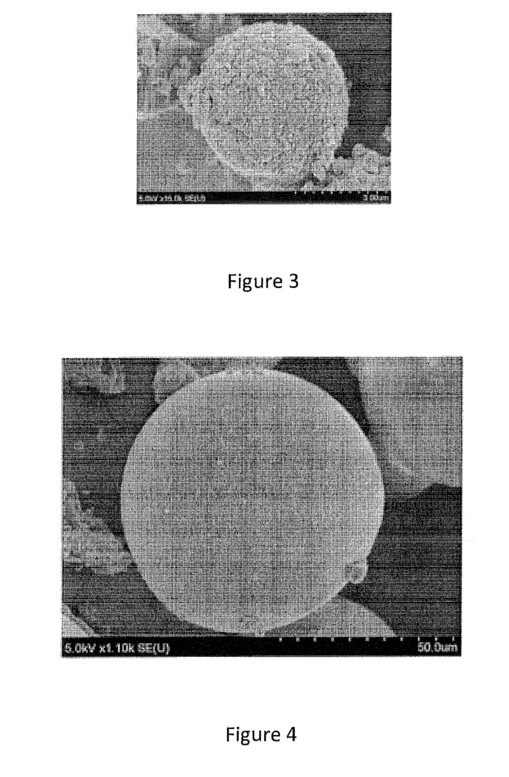

The adhesion of the cuprous oxide-coated powder B1 was evaluated by the following procedure. An electron micrograph after the adhesion test is shown in Figure 3. As a result, the average value of the number of particles, from which the cuprous oxide was peeled, per field of view was 1 or less.
(1) The sample, zirconia beads, and toluene are placed in a container.
(2) They are stirred by a stirring apparatus for 10 minutes.
(3) After the stirring, the sample and the zirconia beads are separated by a sieve.
(4) The separated sample is filtered by a funnel.
(5) The sample is subjected to natural drying.
(6) The peeling state of the cuprous oxide particles is observed by an electron microscope (x500, a magnification at which about 50 particles are included in the field of view is selected).
(7) 10 fields of view are observed at random, the number of peeled particles in each field of view is counted, and the average value is obtained.

### <Storage Stability of Antifouling Paint>

An antifouling paint was formulated using the cuprous oxide-coated powder B1, and allowed to stand for 36 days. The viscosity of the antifouling paint after the standing was measured to be 79 Ku, which was almost unchanged from the viscosity of the antifouling paint immediately after the formulation, 78 Ku.

### (Example 2)

### (Surface Treatment Step)

Fly ash (average particle diameter: 41 µm) (electron micrograph: Figure 4) as a core material was dispersed in an aqueous solution of silver nitrate (1 g/L) followed by stirring, filtration, water-washing, and drying to obtain a surface-treated core material A2.

### (Electrodeposition Step and Water-Washing Step)

Then, 10 g of the surface-treated core material A2 was added to 1 L of an electrolytic aqueous solution, and electrodes were placed. An electric current was passed for 18 minutes under the following conditions, with stirring by the magnetic stirrer, to electrodeposit cuprous oxide on the surface-treated core material A2. Then, the electrolytic aqueous solution was filtered, and the filtered material was water-washed and then dispersed in an aqueous solution of glycerin followed by filtration and drying to obtain 16 g of a cuprous oxide-coated powder B2. The true specific gravity of the cuprous oxide-coated powder B2 was 1.2 g/cm³.

### <Electrolytic Aqueous Solution>

Sodium chloride: 200 g/L (chlorine ion concentration: 121 g/L)
Glycerin: 10 g/L
<Treatment Conditions>
Current density: 7 A/dm²
Liquid temperature of electrolytic aqueous solution: 30°C
Electrodes: copper plates for both anode and cathode

### (Performance Evaluation)

### <Surface Observation>

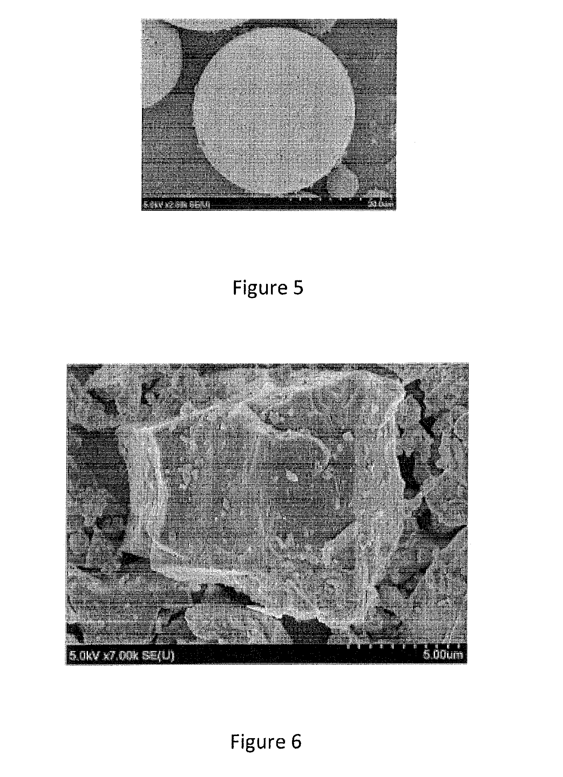

The cuprous oxide-coated powder B2 was observed with the electron microscope. An electron micrograph is shown in Figure 5. As a result, it was observed that the surface of the core material was evenly coated with cuprous oxide particles. In addition, the aggregation of the cuprous oxide-coated powder was hardly seen. In addition, a single powder of cuprous oxide was hardly seen.

### <Particle Size Distribution Measurement>

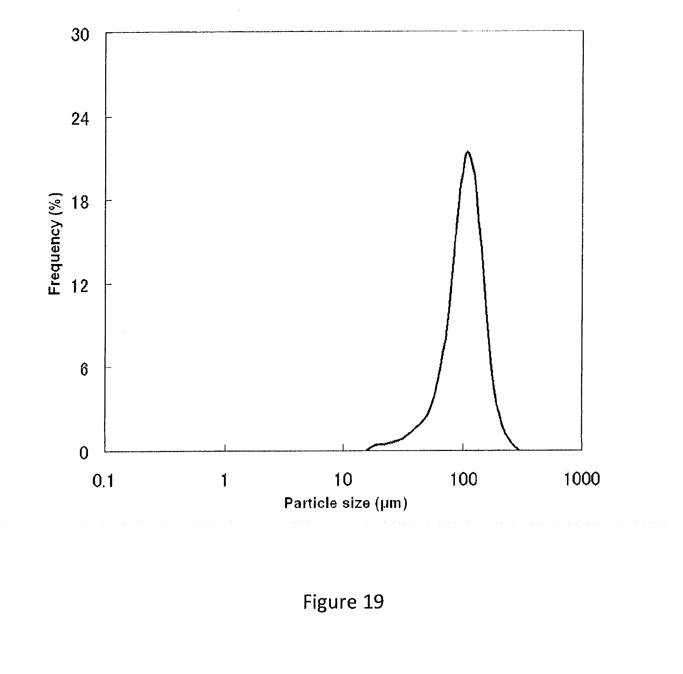

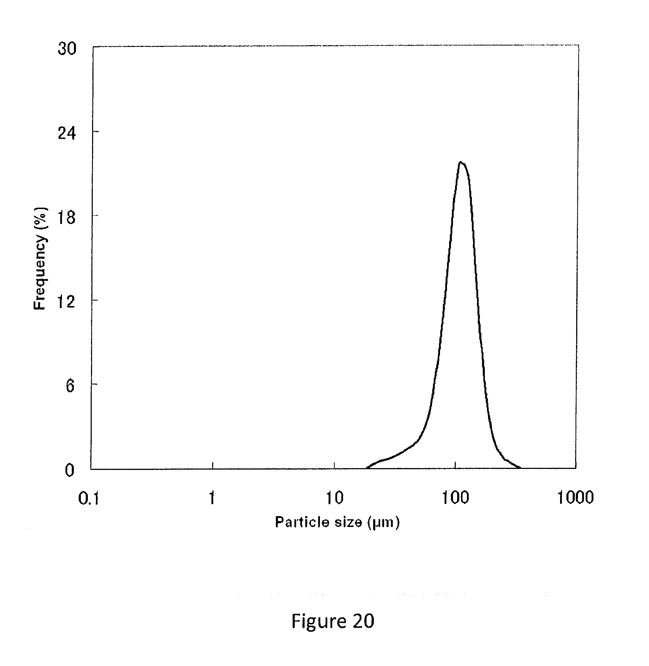

The particle size distribution of the fly ash of the core material, which was a raw material, and the obtained cuprous oxide-coated powder B2 was measured. The particle size distribution of the fly ash of the core material is shown in Figure 19, and the particle size distribution of the cuprous oxide-coated powder B2 is shown in Figure 20. With no fine powder portions seen, the shape of the particle size distribution of the cuprous oxide-coated powder B2 was almost unchanged from the shape of the particle size distribution of the fly ash of the core material, which was a raw material. Therefore, from these distribution diagrams, it is found that in the cuprous oxide-coated powder B2, the surface of the core material is uniformly coated with the cuprous oxide particles.

### <Measurement of Amount of Chlorine Ions Dissolved in Water>

The measurement of the amount of chlorine ions dissolved in water was performed by the same method as in Example 1. The amount of chlorine ions dissolved from the cuprous oxide-coated powder in water was 0.04% by mass with respect to the cuprous oxide-coated powder.

### <Adhesion Test of Cuprous Oxide>

The adhesion test of the cuprous oxide was performed by the same method as in Example 1. The average value of the number of particles from which the cuprous oxide was peeled was 1 or less.

### <Storage Stability of Antifouling Paint>

Operation was performed by the same method as in Example 1. The viscosity of an antifouling paint after standing for 36 days was 74 Ku, which was almost unchanged from the viscosity of the antifouling paint immediately after formulation, 72 Ku.

### (Example 3)

### (Surface Treatment Step)

A silica stone powder (average particle diameter: 32 µm) (electron micrograph: Figure 6) as a core material was dispersed in an aqueous solution of tin fluoride (1 g/L) followed by stirring, filtration, water-washing, dispersion in an aqueous solution of palladium chloride containing hydrochloric acid (palladium chloride: 0.2 g/L, hydrochloric acid 1 ml/L), stirring, filtration, water-washing, and drying to obtain a surface-treated core material A3.

### (Electrodeposition Step and Water-Washing Step)

Then, 10 g of the surface-treated core material A3 was added to 1 L of an electrolytic aqueous solution, and electrodes were placed. An electric current was passed for 25 minutes under the following conditions, with stirring by the magnetic stirrer, to electrodeposit cuprous oxide on the surface-treated core material A3. Then, the electrolytic aqueous solution was filtered, and the filtered material was water-washed and then dispersed in an aqueous solution of glycerin followed by filtration and drying to obtain 16 g of a cuprous oxide-coated powder B3. The true specific gravity of the cuprous oxide-coated powder B3 was 3.2 g/cm³.

### <Electrolytic Aqueous Solution>

Sodium chloride: 200 g/L (chlorine ion concentration: 121 g/L)
Glycerin: 10 g/L
<Treatment Conditions>
Current density: 5 A/dm²
Liquid temperature of electrolytic aqueous solution: 50°C Electrodes: copper plates for both anode and cathode

### (Performance Evaluation)

### <Surface Observation>

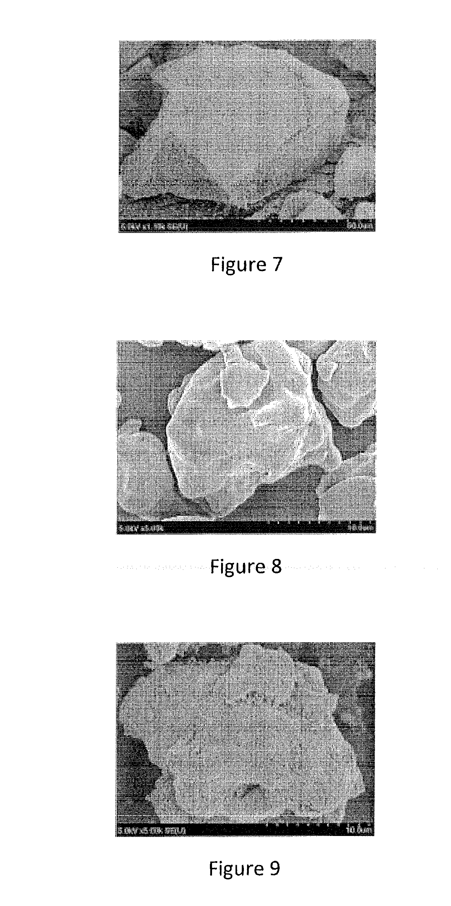

The cuprous oxide-coated powder B3 was observed with the electron microscope. An electron micrograph is shown in Figure 7. As a result, it was observed that the surface of the core material was evenly coated with cuprous oxide particles. In addition, the aggregation of the cuprous oxide-coated powder was hardly seen. In addition, a single powder of cuprous oxide was hardly seen.

### <Particle Size Distribution Measurement>

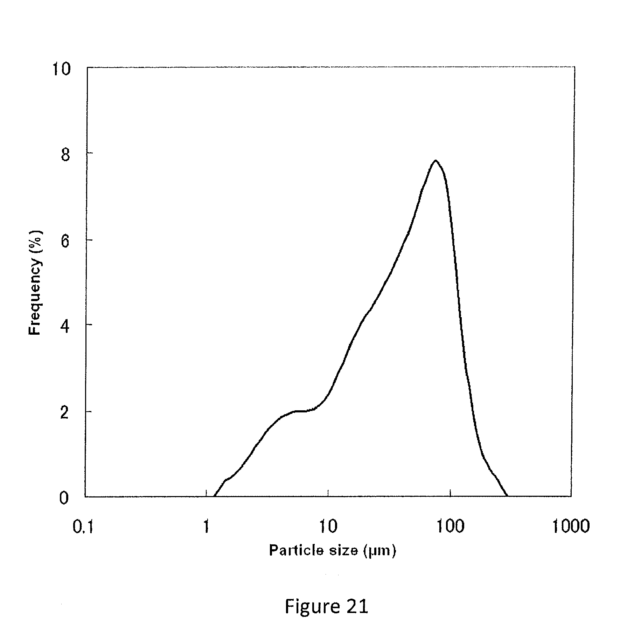

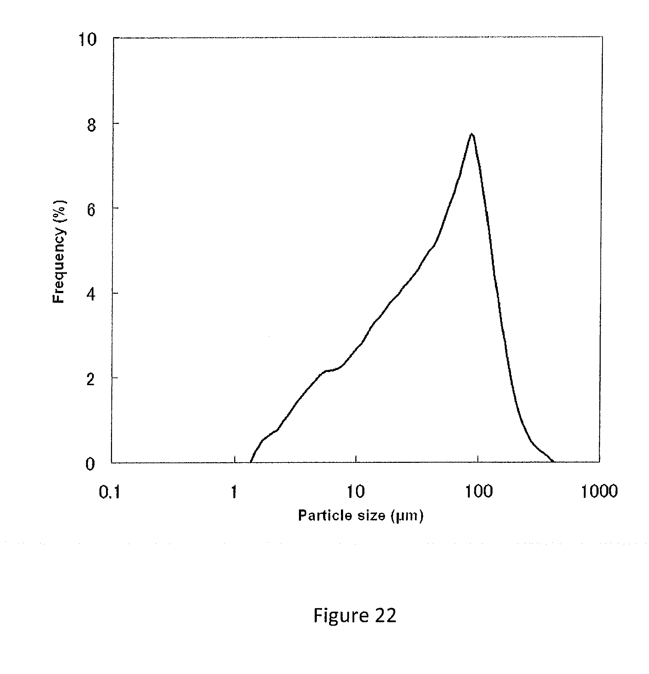

The particle size distribution of the silica stone powder of the core material, which was a raw material, and the obtained cuprous oxide-coated powder B3 was measured. The particle size distribution of the silica stone powder of the core material is shown in Figure 21, and the particle size distribution of the cuprous oxide-coated powder B3 is shown in Figure 22. With no fine powder portions seen, the shape of the particle size distribution of the cuprous oxide-coated powder B3 was almost unchanged from the shape of the particle size distribution of the silica stone powder of the core material, which was a raw material. Therefore, from these distribution diagrams, it is found that in the cuprous oxide-coated powder B3, the surface of the core material is uniformly coated with the cuprous oxide particles.

### <Measurement of Amount of Chlorine Ions Dissolved in Water>

The measurement of the amount of chlorine ions dissolved in water was performed by the same method as in Example 1. The amount of chlorine ions dissolved from the cuprous oxide-coated powder in water was 0.02% by mass with respect to the cuprous oxide-coated powder.

### <Adhesion Test of Cuprous Oxide>

The adhesion test of the cuprous oxide was performed by the same method as in Example 1. The average value of the number of particles from which the cuprous oxide was peeled was 1 or less.

### <Storage Stability of Antifouling Paint>

Operation was performed by the same method as in Example 1. The viscosity of an antifouling paint after standing for 36 days was 76 Ku, which was almost unchanged from the viscosity of the antifouling paint immediately after formulation, 74 Ku.

### (Example 4)

### (Surface Treatment Step)

A polyethylene powder (average particle diameter: 20 µm) (electron micrograph: Figure 8) as a core material was washed with an aqueous solution of sodium hydroxide, then subjected to surface roughening with a mixed acid of chromic acid, sulfuric acid, and phosphoric acid, and then dispersed in an aqueous solution of tin fluoride (1 g/L) followed by stirring, filtration, water-washing, dispersion in an aqueous solution of silver nitrate (1 g/L), stirring, filtration, water-washing, and drying to obtain a surface-treated core material A4.

### (Electrodeposition Step and Water-Washing Step)

Then, 10 g of the surface-treated core material A4 was added to 1 L of an electrolytic aqueous solution, and electrodes were placed. An electric current was passed for 15 minutes under the following conditions, with stirring by the magnetic stirrer, to electrodeposit cuprous oxide on the surface-treated core material A4. Then, the electrolytic aqueous solution was filtered, and the filtered material was water-washed and then dispersed in an aqueous solution of glycerin followed by filtration and drying to obtain 14.6 g of a cuprous oxide-coated powder B4. The true specific gravity of the cuprous oxide-coated powder B4 was 1.2 g/cm³.

### <Electrolytic Aqueous Solution>

Sodium chloride: 250 g/L (chlorine ion concentration: 152 g/L)
Glycerin: 10 g/L
<Treatment Conditions>
Current density: 7 A/dm²
Liquid temperature of electrolytic aqueous solution: 30°C Electrodes: copper plates for both anode and cathode

### (Performance Evaluation)

### <Surface Observation>

The cuprous oxide-coated powder B4 was observed with the electron microscope. An electron micrograph is shown in Figure 9. As a result, it was observed that the surface of the core material was evenly coated with cuprous oxide particles. In addition, the aggregation of the cuprous oxide-coated powder was hardly seen. In addition, a single powder of cuprous oxide was hardly seen.

### <Particle Size Distribution Measurement>

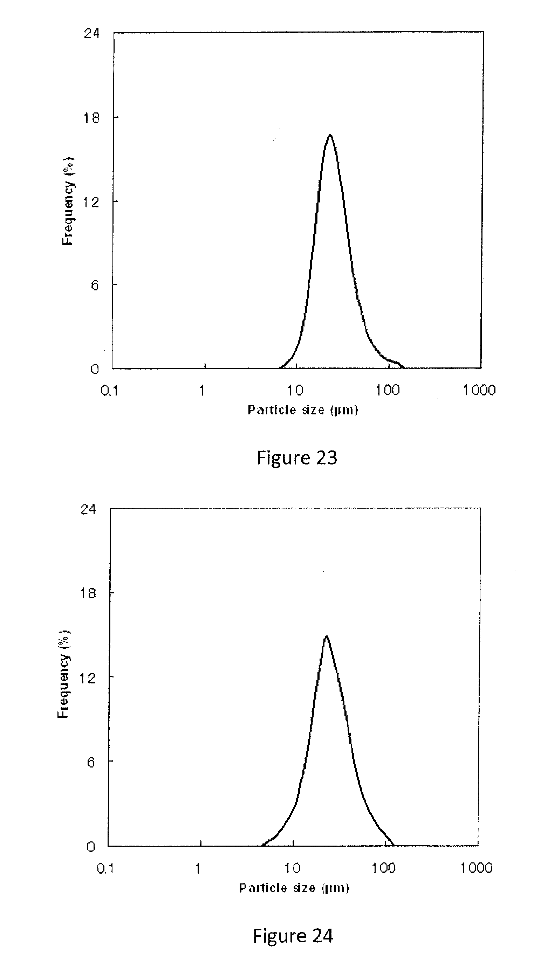

The particle size distribution of the polyethylene powder of the core material, which was a raw material, and the obtained cuprous oxide-coated powder B4 was measured. The particle size distribution of the polyethylene powder of the core material is shown in Figure 23, and the particle size distribution of the cuprous oxide-coated powder B4 is shown in Figure 24. With no fine powder portions seen, the shape of the particle size distribution of the cuprous oxide-coated powder B4 was almost unchanged from the shape of the particle size distribution of the polyethylene powder of the core material, which was a raw material. Therefore, from these distribution diagrams, it is found that in the cuprous oxide-coated powder B4, the surface of the core material is uniformly coated with the cuprous oxide particles.

### <Measurement of Amount of Chlorine Ions Dissolved in Water>

The measurement of the amount of chlorine ions dissolved in water was performed by the same method as in Example 1. The amount of chlorine ions dissolved from the cuprous oxide-coated powder in water was 0.02% by mass with respect to the cuprous oxide-coated powder.

### <Adhesion Test of Cuprous Oxide>

The adhesion test of the cuprous oxide was performed by the same method as in Example 1. The average value of the number of particles from which the cuprous oxide was peeled was 1 or less.

### <Storage Stability of Antifouling Paint>

Operation was performed by the same method as in Example 1. The viscosity of an antifouling paint after standing for 36 days was 80 Ku, which was almost unchanged from the viscosity of the antifouling paint immediately after formulation, 78 Ku.

### (Example 5)

### (Surface Treatment Step)

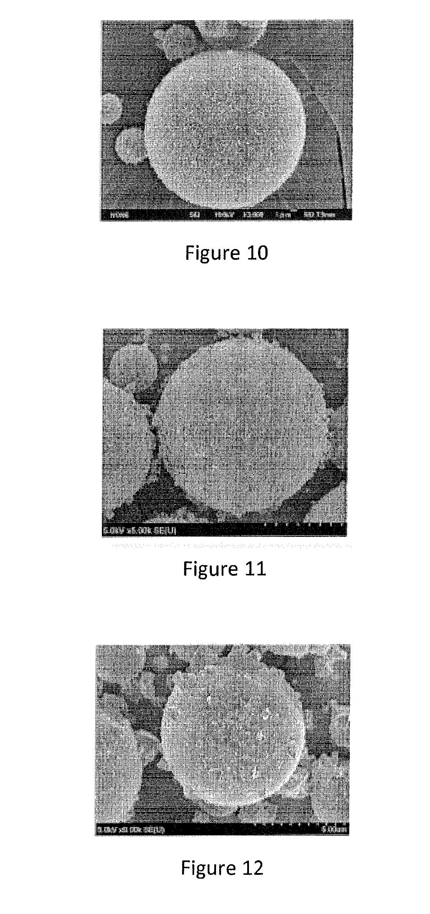

A fused silica powder (amorphous, average particle diameter: 20 µm) (electron micrograph: Figure 10) as a core material was alkali-washed with an aqueous solution of sodium hydroxide, subjected to surface roughening with hydrofluoric acid, and then dispersed in an aqueous solution of tin fluoride (1 g/L) followed by stirring, filtration, water-washing, dispersion in an aqueous solution of silver nitrate (1 g/L), stirring, filtration, water-washing, and drying to obtain a surface-treated core material A5.

### (Electrodeposition Step and Water-Washing Step)

Then, 10 g of the surface-treated core material A5 was added to 1 L of an electrolytic aqueous solution, and electrodes were placed. An electric current was passed for 15 minutes under the following conditions, with stirring by the magnetic stirrer, to electrodeposit cuprous oxide on the surface-treated core material A5. Then, the electrolytic aqueous solution was filtered, and the filtered material was water-washed and then dispersed in an aqueous solution of glycerin followed by filtration and drying to obtain 14.3 g of a cuprous oxide-coated powder B5. The true specific gravity of the cuprous oxide-coated powder B5 was 2.8 g/cm³.

### <Electrolytic Aqueous Solution>

Sodium chloride: 250 g/L (chlorine ion concentration: 152 g/L)
Glycerin: 10 g/L
<Treatment Conditions>
Current density: 7 A/dm²
Liquid temperature of electrolytic aqueous solution: 30°C Electrodes: copper plates for both anode and cathode

### (Performance Evaluation)

### <Surface Observation>

The cuprous oxide-coated powder B5 was observed with the electron microscope. An electron micrograph is shown in Figure 11. As a result, it was observed that the surface of the core material was evenly coated with cuprous oxide particles. In addition, the aggregation of the cuprous oxide-coated powder was hardly seen. In addition, a single powder of cuprous oxide was hardly seen.

### <Particle Size Distribution Measurement>

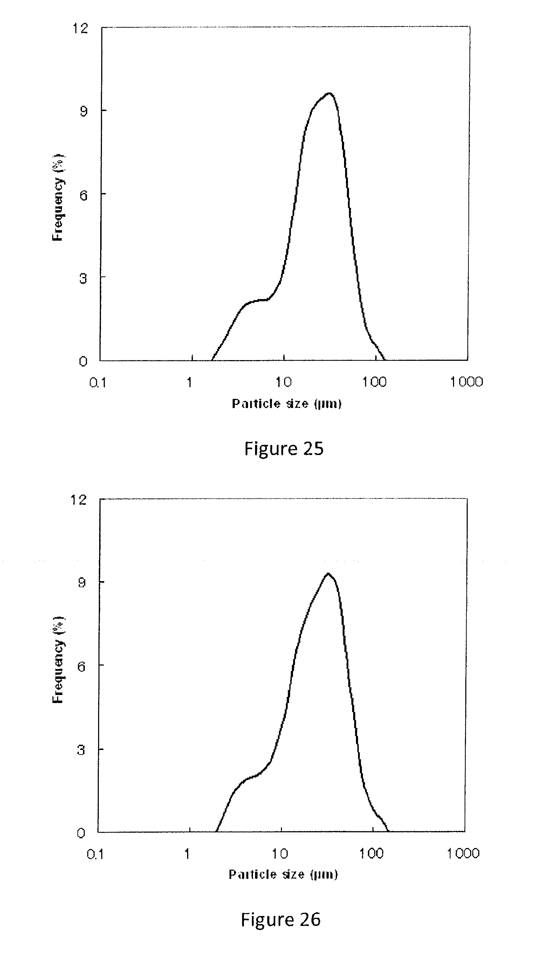

The particle size distribution of the fused silica powder of the core material, which was a raw material, and the obtained cuprous oxide-coated powder B5 was measured. The particle size distribution of the fused silica powder of the core material is shown in Figure 25, and the particle size distribution of the cuprous oxide-coated powder B5 is shown in Figure 26. With no fine powder portions seen, the shape of the particle size distribution of the cuprous oxide-coated powder B5 was almost unchanged from the shape of the particle size distribution of the fused silica powder of the core material, which was a raw material. Therefore, from these distribution diagrams, it is found that in the cuprous oxide-coated powder B5, the surface of the core material is uniformly coated with the cuprous oxide particles.

### <Measurement of Amount of Chlorine Ions Dissolved in Water>

The measurement of the amount of chlorine ions dissolved in water was performed by the same method as in Example 1. The amount of chlorine ions dissolved from the cuprous oxide-coated powder in water was 0.03% by mass with respect to the cuprous oxide-coated powder.

### <Adhesion Test of Cuprous Oxide>

The adhesion test of the cuprous oxide was performed by the same method as in Example 1. The average value of the number of particles from which the cuprous oxide was peeled was 1 or less.

### <Stability of Antifouling Paint>

Operation was performed by the same method as in Example 1. The viscosity of an antifouling paint after standing for 36 days was 78 Ku, which was almost unchanged from the viscosity of the antifouling paint immediately after formulation, 76 Ku.

### (Comparative Example 1)

### (Electrodeposition Step and Water-Washing Step)

10 g of the silica powder (average particle diameter: 5 µm) used in Example 1, as a core material, was added to 1 L of an electrolytic aqueous solution, and electrodes were placed. An electric current was passed for 36 minutes under the following conditions, with stirring by the magnetic stirrer, to electrodeposit cuprous oxide on the core material. Then, the electrolytic aqueous solution was filtered, and the filtered material was water-washed and then dispersed in an aqueous solution of glycerin followed by filtration and drying to obtain 21 g of a cuprous oxide-coated powder B6. The true specific gravity of the cuprous oxide-coated powder B6 was 3.1 g/cm³.

### <Electrolytic Aqueous Solution>

Sodium chloride: 400 g/L (chlorine ion concentration: 243 g/L)
Glycerin: 10 g/L
<Treatment Conditions>
Current density: 7 A/dm²
Liquid temperature of electrolytic aqueous solution: 40°C Electrodes: copper plates for both anode and cathode

### (Performance Evaluation)

### <Surface Observation>

The cuprous oxide-coated powder B6 was observed with the electron microscope. An electron micrograph is shown in Figure 12. As a result, it was observed that the surface of the core material was sparsely coated with cuprous oxide particles. In addition, the aggregation of the cuprous oxide-coated powder was seen. In addition, a single powder of cuprous oxide was seen.

### <Particle Size Distribution Measurement>

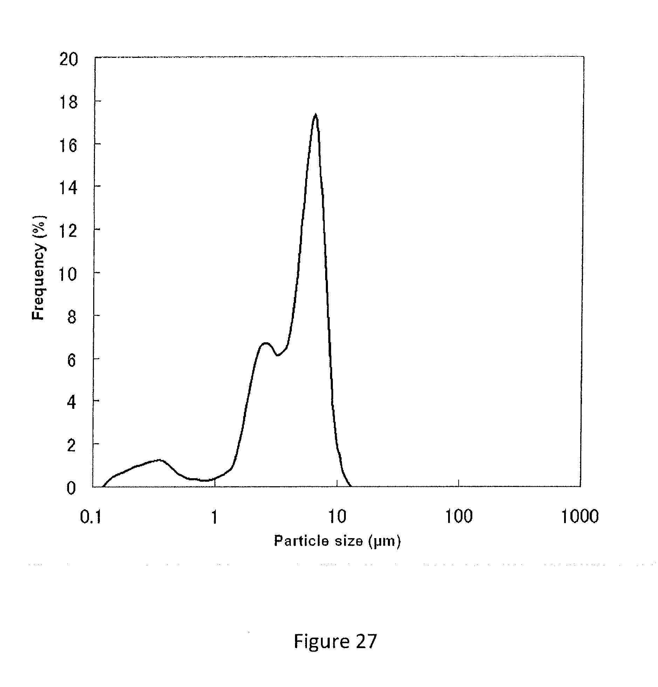

The particle size distribution of the obtained cuprous oxide-coated powder B6 was measured. The particle size distribution of the cuprous oxide-coated powder B6 is shown in Figure 27. There were more fine portions in the particle size distribution of the cuprous oxide-coated powder B6 than in the particle size distribution of the silica powder of the core material, which was a raw material (Figure 17). Therefore, from these distribution diagrams, it is found that in the cuprous oxide-coated powder B6, the surface of the core material is not uniformly coated with the cuprous oxide particles, and aggregates of the cuprous oxide-coated powder are present.

### <Measurement of Amount of Chlorine Ions Dissolved in Water>

The measurement of the amount of chlorine ions dissolved in water was performed by the same method as in Example 1. The amount of chlorine ions dissolved from the cuprous oxide-coated powder in water was 0.20% by mass with respect to the cuprous oxide-coated powder.

### <Adhesion Test of Cuprous Oxide>

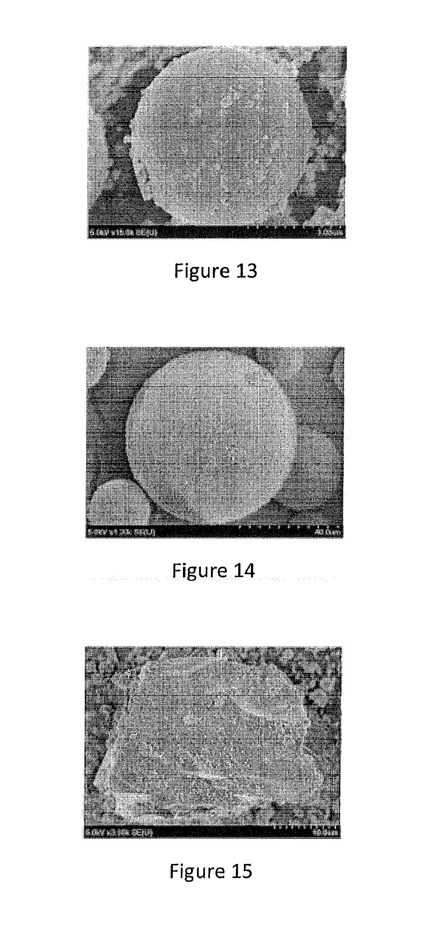

The adhesion test of the cuprous oxide was performed by the same method as in Example 1. An electron micrograph is shown in Figure 13. As a result, the peeling of the cuprous oxide particles was seen in all fields of view.

### <Storage Stability of Antifouling Paint>

Operation was performed by the same method as in Example 1. The viscosity of an antifouling paint after standing for 36 days was 99 Ku, which was higher than the viscosity of the antifouling paint immediately after formulation, 76 Ku.

### (Comparative Example 2)

### (Electrodeposition Step and Water-Washing Step)

10 g of the fly ash (average particle diameter: 41 µm) used in Example 2, as a core material, was added to 1 L of an electrolytic aqueous solution, and electrodes were placed. An electric current was passed for 25 minutes under the following conditions, with stirring by the magnetic stirrer, to electrodeposit cuprous oxide on the core material. Then, the electrolytic aqueous solution was filtered, and the filtered material was water-washed and then dispersed in an aqueous solution of glycerin followed by filtration and drying to obtain 16 g of a cuprous oxide-coated powder B7. The true specific gravity of the cuprous oxide-coated powder B7 was 3.2 g/cm³.

### <Electrolytic Aqueous Solution>

Sodium chloride: 200 g/L (chlorine ion concentration: 121 g/L)
Glycerin: 10 g/L
<Treatment Conditions>
Current density: 5 A/dm²
Liquid temperature of electrolytic aqueous solution: 50°C Electrodes: copper plates for both anode and cathode

### (Performance Evaluation)

### <Surface Observation>

The cuprous oxide-coated powder B7 was observed with the electron microscope. An electron micrograph is shown in Figure 14. As a result, it was observed that the surface of the core material was sparsely coated with cuprous oxide particles. In addition, the aggregation of the cuprous oxide-coated powder was seen. In addition, a single powder of cuprous oxide was seen.

### <Particle Size Distribution Measurement>

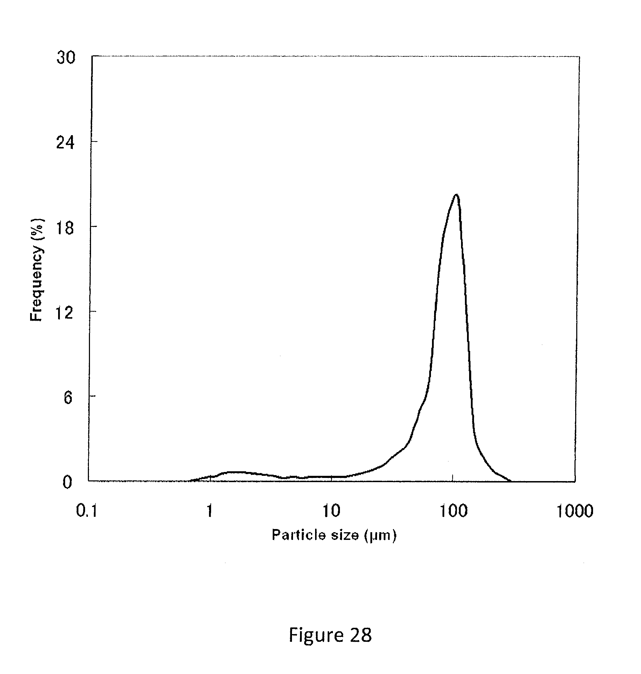

The particle size distribution of the obtained cuprous oxide-coated powder B7 was measured. The particle size distribution of the cuprous oxide-coated powder B7 is shown in Figure 28. There were more fine portions in the particle size distribution of the cuprous oxide-coated powder B7 than in the particle size distribution of the fly ash of the core material, which was a raw material (Figure 19). Therefore, from these distribution diagrams, it is found that in the cuprous oxide-coated powder B7, the surface of the core material is not uniformly coated with the cuprous oxide particles, and the aggregation of the cuprous oxide-coated powder is present.

### <Measurement of Amount of Chlorine Ions Dissolved in Water>

The measurement of the amount of chlorine ions dissolved in water was performed by the same method as in Example 1. The amount of chlorine ions dissolved from the cuprous oxide-coated powder in water was 0.03% by mass with respect to the cuprous oxide-coated powder.

### <Adhesion Test of Cuprous Oxide>

The adhesion test of the cuprous oxide was performed by the same method as in Example 1. The peeling of the cuprous oxide particles was seen in all fields of view.

### <Storage Stability of Antifouling Paint>

Operation was performed by the same method as in Example 1. The viscosity of an antifouling paint after standing for 36 days was 81 Ku, which was almost unchanged from the viscosity of the antifouling paint immediately after formulation, 80 Ku.

### (Comparative Example 3)

### (Electrodeposition Step and Water-Washing Step)

10 g of the silica stone powder (average particle diameter: 32 µm) used in Example 3, as a core material, was added to 1 L of an electrolytic aqueous solution, and electrodes were placed. An electric current was passed for 25 minutes under the following conditions, with stirring by the magnetic stirrer, to electrodeposit cuprous oxide on the core material. Then, the electrolytic aqueous solution was filtered, and the filtered material was water-washed and then dispersed in an aqueous solution of glycerin followed by filtration and drying to obtain 16 g of a cuprous oxide-coated powder B8. The true specific gravity of the cuprous oxide-coated powder B8 was 3.2 g/cm³.

### <Electrolytic Aqueous Solution>

Sodium chloride: 400 g/L (chlorine ion concentration: 243 g/L)
Glycerin: 10 g/L
<Treatment Conditions>
Current density: 5 A/dm²
Liquid temperature of electrolytic aqueous solution: 50°C Electrodes: copper plates for both anode and cathode

### (Performance Evaluation)

### <Surface Observation>

The cuprous oxide-coated powder B8 was observed with the electron microscope. An electron micrograph is shown in Figure 15. As a result, it was observed that the surface of the core material was sparsely coated with cuprous oxide particles. In addition, the aggregation of the cuprous oxide-coated powder was seen (Figure 16). In addition, a single powder of cuprous oxide was seen.

### <Particle Size Distribution Measurement>

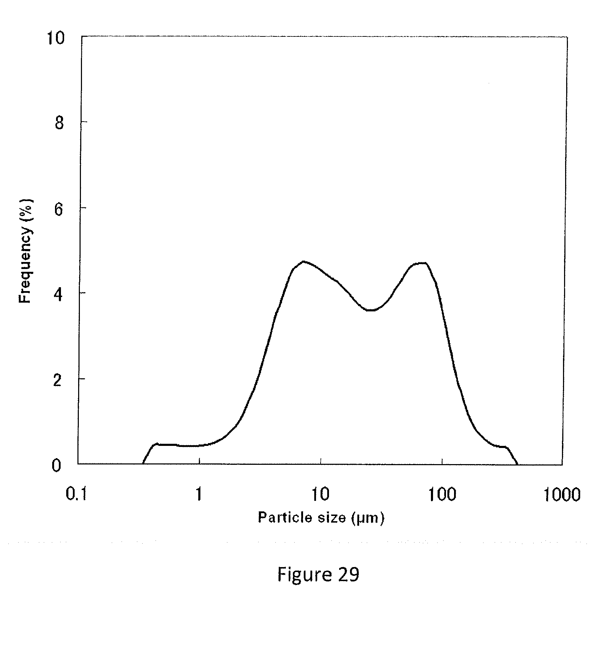

The particle size distribution of the obtained cuprous oxide-coated powder B8 was measured. The particle size distribution of the cuprous oxide-coated powder B8 is shown in Figure 29. There were more fine portions in the particle size distribution of the cuprous oxide-coated powder B8 than in the particle size distribution of the silica stone powder of the core material, which was a raw material. Therefore, from these distribution diagrams, it is found that in the cuprous oxide-coated powder B8, the surface of the core material is not uniformly coated with the cuprous oxide particles, and the aggregation of the cuprous oxide-coated powder is present.

### <Measurement of Amount of Chlorine Ions Dissolved in Water>

The measurement of the amount of chlorine ions dissolved in water was performed by the same method as in Example 1. The amount of chlorine ions dissolved from the cuprous oxide-coated powder in water was 0.15% by mass with respect to the cuprous oxide-coated powder.

### <Adhesion Test of Cuprous Oxide>

The adhesion test of the cuprous oxide was performed by the same method as in Example 1. The peeling of the cuprous oxide particles was seen in all fields of view.

### <Storage Stability of Antifouling Paint>

Operation was performed by the same method as in Example 1. The viscosity of an antifouling paint after standing for 36 days was 95 Ku, which was higher than the viscosity of the antifouling paint immediately after formulation, 80 Ku.

**[Table 1]**

| | Throwing power | Adhesion | Dispersibi lity | Solubility Cl (%) | Paint stability |
|---|---|---|---|---|---|
| Example 1 | ○ | ○ | ○ | 0. 05 | ○ |
| Example 2 | ○ | ○ | ○ | 0. 04 | ○ |
| Examples 3 | ○ | ○ | ○ | 0. 02 | ○ |
| Example 4 | ○ | ○ | ○ | 0. 02 | ○ |
| Example 5 | ○ | ○ | ○ | 0. 03 | ○ |
| Comparative Example 1 | × | × | × | 0. 20 | × |
| Comparative Example 2 | × | × | × | 0. 03 | ○ |
| Comparative Example 3 | × | × | × | 0. 15 | × |

In Table 1, for the throwing power, a case where the state of electrodeposition of the cuprous oxide particles on the core material was whole is "○," and a case where the state of electrodeposition was partial is "×." For the adhesion, a case where the average value of the number of particles in which the cuprous oxide particles were peeled from the core material was 1 or less is "○," and a case where the average value of the number of particles was more than 1 is "×." For the dispersibility, a case where there were no aggregate particles is "○," and a case where there were aggregate particles is "×." For the paint stability, a case where the change in the viscosity of the paint was less than 10% after a lapse of 36 days is "○," and a case where the change in the viscosity was 10% or more is "×."

## Claims

1. A cuprous oxide-coated powder comprising a core material and cuprous oxide coating the surface of the core material, **characterized in that**
a mass ratio of the core material/the cuprous oxide is 95/5 to 10/90, and
an amount of chlorine ions dissolved from the cuprous oxide-coated powder in water is 0.1% by mass or less with respect to the cuprous oxide-coated powder.

2. The cuprous oxide-coated powder according to claim 1, **characterized in that** the core material is a silicic acid-containing inorganic compound.

3. The cuprous oxide-coated powder according to claim 1, **characterized in that** the core material is an alkaline earth metal compound.

4. The cuprous oxide-coated powder according to claim 1, **characterized in that** the core material is an organic compound.

5. The cuprous oxide-coated powder according to claim 1, **characterized in that** the core material is alumina.

6. A method for manufacturing a cuprous oxide-coated powder, **characterized by** comprising:
a surface treatment step of contacting a core material with any one or two or more surface treatment aqueous solutions of an aqueous solution of a stannous salt, an aqueous solution of a silver salt, and an aqueous solution of a palladium salt to obtain a surface-treated core material;
an electrodeposition step of dispersing the surface-treated core material in an electrolytic aqueous solution containing an electrolyte and an antioxidant, and electrodepositing cuprous oxide on the surface of the surface-treated core material, using metal copper as an anode, to obtain a cuprous oxide-coated powder; and
a water-washing step of water-washing the cuprous oxide-coated powder to obtain a cuprous oxide-coated powder, wherein
the concentration of chlorine ions in the electrolytic aqueous solution is 20 to 200 g/L.

7. The method for manufacturing a cuprous oxide-coated powder according to claim 5, **characterized in that** the surface treatment aqueous solution is any one or two or more of an aqueous solution of tin fluoride, an aqueous solution of silver nitrate, and an aqueous solution of palladium chloride.

8. The method for manufacturing a cuprous oxide-coated powder according to any one of claim 5 or 6, **characterized in that** the electrolyte is sodium chloride.

9. The method for manufacturing a cuprous oxide-coated powder according to any one of claims 5 to 7, **characterized in that** the antioxidant is glycerin.

10. The method for manufacturing a cuprous oxide-coated powder according to any one of claims 5 to 8, **characterized in that** the water-washing step is performed by washing the cuprous oxide-coated powder with wash water containing an antioxidant.
